**Europäisches Patentamt**

**European Patent Office**

**Office européen des brevets**

(11) Veröffentlichungsnummer: **0 456 672 B1**

## EUROPÄISCHE PATENTSCHRIFT

(45) Veröffentlichungstag der Patentschrift: **04.05.94**

(51) Int. Cl.5: **H04N 5/91**

(21) Anmeldenummer: **90902204.8**

(22) Anmeldetag: **01.02.90**

(86) Internationale Anmeldenummer:
**PCT/EP90/00176**

(87) Internationale Veröffentlichungsnummer:
**WO 90/09077 (09.08.90 90/19)**

(54) **EINRICHTUNG MIT EINER VIDEOKAMERA UND EINEM VIDEORECORDER.**

(30) Priorität: **06.02.89 DE 3903417**

(43) Veröffentlichungstag der Anmeldung:
**21.11.91 Patentblatt 91/47**

(45) Bekanntmachung des Hinweises auf die Patenterteilung:
**04.05.94 Patentblatt 94/18**

(84) Benannte Vertragsstaaten:
**AT BE DE DK ES FR GB IT LU NL SE**

(56) Entgegenhaltungen:
EP-A- 0 264 685    WO-A-87/00381
DE-A- 3 327 100    FR-A- 2 290 112
GB-A- 2 116 397    GB-A- 2 162 019
US-A- 4 612 575    US-A- 4 745 482

(73) Patentinhaber: **DEUTSCHE THOMSON-BRANDT GMBH**
**Hermann-Schwer-Strasse 3**
**D-78048 Villingen-Schwenningen(DE)**

(72) Erfinder: **PLATTE, Hans-Joachim**
**Königsberger Weg 22**
**D-3005 Hemmingen 4(DE)**
Erfinder: **WIPPERMANN, Horst**
**Am Wall 64**
**D-3017 Pattensen(DE)**

(74) Vertreter: **Einsel, Robert, Dipl.-Ing.**
**Deutsche Thomson-Brandt GmbH**
**Patent- und Lizenzabteilung**
**Göttinger Chaussee 76**
**D-30453 Hannover (DE)**

## Beschreibung

Die Erfindung geht aus von einer Einrichtung gemäß dem Oberbegriff des Anspruchs 1. Videokameras mit einem Bewegungsdetektor zur Beseitigung von Bildverwacklungen sind bekannt, z. B. durch die DE-A-36 34 414.

Bei einer derartigen Kamera wird mit einem Bewegungsdetektor, z.B. eine Gyrator, die Beschleunigung in der Bewegung der Kamera gemessen. Eine Beschleunigung oberhalb eines bestimmten Wertes wird als eine ungewollte Bewegung der Kamera z.B. in Form eines Stoßes oder einer Erschütterung registriert. Daraus wird ein Kennsignal erzeugt. Dieses Kennsignal steuert die Ablenkung zur Erzeugung des Bildsignals auf dem Target derart, daß die durch die starke Beschleunigung an sich auftretende Bildverwacklung beseitigt wird. Diese Lösung erfordert relativ komplizierte Maßnahmen konstruktiver und elektronischer Art in der Kamera selbst. Das ist nachteilig, weil gerade tragbare Videokameras möglichst klein und leicht ausgebildet sein sollen.

Der Erfindung liegt die Aufgabe zugrunde, eine Einrichtung mit Mitteln zur Beseitigung der Bildverwacklungen zu schaffen, die weitestgehend unabhängig von der Videokamera arbeitet, auch in einer stationären Anlage einsetzbar ist und den Freiraum des reversiblen Abgleichs der Kompensation bei der Wiedergabe erlaubt.

Diese Aufgabe wird durch die im Anspruch 1 angegebene Erfindung gelöst. Vorteilhafte Weiterbildungen der Erfindung sind in den Unteransprüchen angegeben.

Es ist bekannt (GB-A-2 116 397), das von einer Kamera erzeugte Videosignal und ein aus Bewegungen der Kamera abgeleitetes Korrektursignal gemeinsam auf einem Recorder aufzuzeichnen, um eine spätere Korrektur des Videosignal zu ermöglichen. Dabei wird jedoch kein Videosignal eines Bildes aufgezeichnet, das wesentlich größer ist als der jeweils gewünschte Bildausschnitt.

Es ist auch bekannt (EP-A-0 264 685, GB-A-2 162 019 und US-A-4 612 575), einer Kamera Bewegungssensoren in Form von Gyratoren zuzuordnen, die ein unerwünschte Bewegungen der Kamera darstellendes Korrektursignal erzeugen. Mit diesem Korrektursignal wird das Ablenkraster auf dem Target der Kamera bei unerwünschten Bewegungen des Kameragehäuses so verschoben, daß die Verwackelung kompensiert wird. Eine Aufzeichnung des Korrektursignals und eine spätere Verwendung des Korrektursignals für die Signalkorrektur bei Verwackelungen ist dort nicht vorgesehen.

Es ist auch bekannt (WO-A-87/00381), ein von einem Band abgetastetes Videosignal in einem Prozessor mit verlangsamter Geschwindigkeit zu bearbeiten. Dabei erfolgten vorzugsweise eine langsame Korrektur der abgetasteten Signale und eine Aufzeichnung auf einem anderen Aufzeichnungsgerät. Die Aufgabe, Verwackelungen in dem Signal einer Videokamera zu beseitigen, wird dort nicht behandelt.

Die Erfindung beruht auf folgenden Erkenntnissen und Überlegungen. Die Bewegung einer Kamera beim Aufnahmebetrieb enthält im allgemeinen Fall zwei Komponenten. Die erste Bewegungskomponente ist die vom Bedienenden gewünschte Bewegung der Kamera, z.B. eine Schwenkbewegung. Diese Bewegungskomponente ist im allgemeinen eine stetige und relativ langsame Bewegung. Die zweite Bewegungskomponente kann eine vom Bedienenden nicht gewünschte, durch Stöße, Erschütterungen oder manuelle Reflexe des Kamerabenutzers hervorgerufene Bewegung sein. Diese Komponente ist im Vergleich zur ersten Komponente relativ schnell, z.B. ruckartig. Die zweite Komponente führt in der Regel zu unerwünschten Verwacklungen im Bild. Mit einem der Kamera zugeordneten Bewegungsdetektor wird nun die jeweilige Bewegung der Kamera ermittelt. Das von dem Detektor erzeugte, die Bewegung kennzeichnende Kennsignal wird jedoch in der Kamera nicht verwertet, sondern zunächst zusammen mit dem Videosignal auf dem Videorecorder aufgezeichnet. Das aufgezeichnete Signal enthält dann eine Information, welche Bewegung die Kamera in jedem Augenblick der Gesamtaufnahme durchgeführt hat. Bei der Wiedergabe wird das Kennsignal in einer speziellen Schaltung analysiert in die erste Bewegungskomponente, die erwünscht ist und keiner Korrektur bedarf, und in die zweite Bewegungskomponente, deren Auswirkung bei der Bildwiedergabe beseitigt werden soll. Das auf der zweiten Bewegungskomponente beruhende Kennsignal wird jetzt bei der Wiedergabe zur Beeinflussung des Videosignals im Sinne einer Verringerung der Bildverwacklung ausgenutzt.

Die erfindungsgemaße Lösung hat den Vorteil, daß an der Kamera selbst relativ wenige Maßnahmen erforderlich sind, da das Kennsignal in der Kamera selbst nicht verwertet wird. Die Bearbeitung des Videosignals im Sinne einer Verringerung der Bildverwacklungen erfolgt indessen bei der Wiedergabe des aufgezeichneten Signals, also einer im allgemeinen stationären Anlage. Dadurch ergibt sich der Vorteil, daß diese Nachbearbeitung des Videosignals im Sinne einer Verringerung der Verwacklungen in einem geänderten Zeitmaßstab, insbesondere mit stark verringerter Geschwindigkeit erfolgen kann. Ein derartiges Verfahren zur langsamen Nachbearbeitung und Korrektur von Videosignalen ist näher beschrieben in der DE-A-36 18 236. Eine darartige Bearbeitung über einen im vergleich zu eigentlichen Dauer der gesamten Aufnahme wesentlichen längeren Zeitraum ist mit einer stationären Anlagen ohne Schwierigkeiten möglich. Durch eine solche Bearbeitung mit einem veränderten Zeitmaßstab können die Schaltungen wesentlich vereinfacht und die Effektivität in der Bearbeitung des Videosignals erhöht werden. Außerdem können die Parameter der Nachbearbeitung experimentell in mehreren Probeläufen ermittelt werden, durch die die Aufnahme an sich nicht verändert wird.

Die Erfindung wird anhand der Zeichnung erläutert. Darin zeigen

    Fig. 1    die grundsätzliche Wirkungsweise der Erfindung,

    Fig. 2    eine Target-Darstellung zur Erläuterung der Wirkungsweise der Fig. 1,

    Fig. 3    im Prinzip die Wiedergabeschaltung,

    Fig. 4    ein Weg/Zeit-Diagramm für die Bewegung.

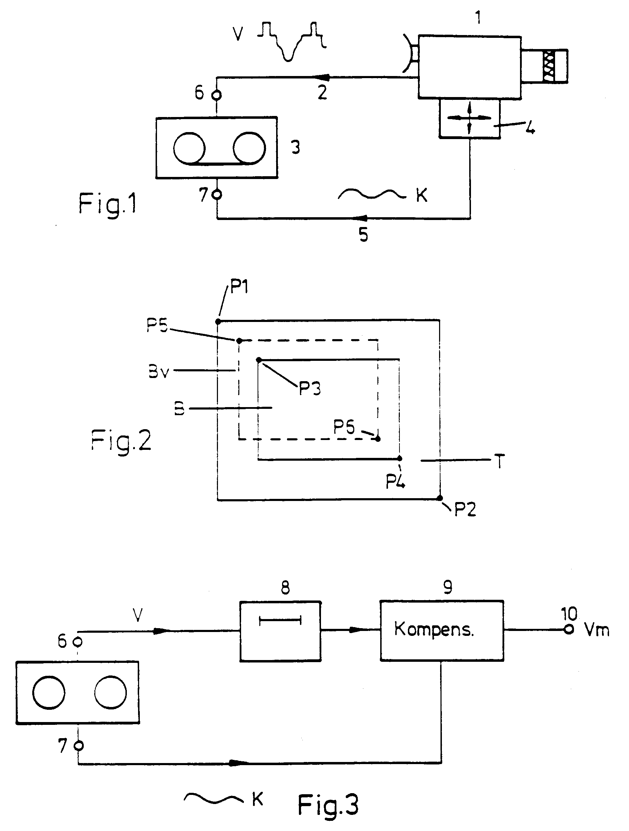

Fig. 1 zeigt die Videokamera 1, die an der Leitung 2 ein Videosignal V liefert. Das Videosignal V wird der Eingangsklemme 6 des Videorecorders 3 zugeführt und mit dem Recorder 3 aufgezeichnet. Der Kamera 1 ist zusätzlich ein Bewegungsdetektor (Beschleunigungsaufnehmer) 4 zugeordnet, der die Geschwindigkeit und die Beschleunigung der Kamerabewegung in den für die x- und y-Richtungen der Target-Ebene relevanten Komponenten ermittelt. Der Detektor 4 liefert ein die Bewegung der Kamera darstellendes Kennsignal K an der Leitung 5. Das Kennsignal K wird der weiteren Eingangsklemme 7 des Recorder 3 zugeführt und ebenfalls mit dem Recorder 3 aufgezeichnet. Das Signal K hat überwiegend niederfrequente Komponenten in der Größenordnung bis zu 10 Hz und kann z.B. unterhalb des Tonsignals auf der Längsspur eines mit Schrägspuren beschriebenen Videobandes aufgezeichnet werden. Mit dem Recorder sind dann das den Bildinhalt darstellende Videosignal V und das in jedem Augenblick die Bewegung der Kamera 1 darstellende Kennsignal K aufgezeichnet.

Fig. 2 zeigt das Target T der Kamera 1, das vollständig mit dem durch die Kamera 1 erfaßten Bild belichtet ist. Zur Erzeugung des Videosignals V wird auch das gesamte Target abgetastet. Das Videosignal V stellt also den gesamter Bildinhalt des Target T vom Punkt P1 bis zum Punkt P2 dar. Dieses Videosignal V des gesamten Target T wird gemäß Fig. 1 aufgezeichnet.

Bei der Wiedergabe des so aufgezeichneten Signals wird aber zunächst nur das Signal des Bildausschnitts B zwischen den Punkten P3 und P4 ausgewertet. Die gesamte Anordnung mit dem Objektiv und dem Target ist so getroffen, daß der Bildausschnitt B dem für die Wiedergabe gewünschten Bildausschnitt entspricht, die Bildteile im Randbereich außerhalb des Bildausschnitts B also nicht wiedergegeben werden.

Bei einer Stoßbewegung oder Erschütterung der Kamera 1 ist auf dem gesamten Target T ein verschobenes Bild im Sinne einer Verwacklung abgebildet. Es sei aber angenommen, daß bei dieser Verwacklung der an sich gewünschte Bildausschnitt B nach wie vor im Bereich des Target T liegt, angedeutet durch den verschobenen Bildausschnitt Bv zwischen den Punkten P5 und P6. Da das Videosignal des gesamten Target aufgezeichnet ist, ist also trotz der Verwacklung der an sich gewünschte verschobene Bildausschnitt Bv verfügbar. Während bei der Wiedergabe an sich nur das Videosignal des Bildausschnitts B zwischen P3 und P4 ausgewertet wird, wird bei der dargestellten Verwacklung durch das Kennsignal K bewirkt, daß aus dem insgesamt vorhandenem Videosignal V nunmehr das Videosignal für den Bildausschnitt Bv zwischen den Punkten P5 und P6 ausgewertet wird. Auf diese Weise kann also bei der Wiedergabe des aufgezeichneten Videosignals V die Verwacklung beseitigt werden.

Fig. 3 zeigt im Prinzip eine Anordnung zur Durchführung der Korrektur gemäß Fig. 2. Das Videosignal V des gesamten Target T wird über die Verzögerungsstufe 8 dem Kompensator 9 zugeführt, dem andererseits das Kennsignal K zugeleitet wird. Durch die Verzögerungsstufe 8 wird erreicht, daß im Kompensator 9 der Zeitverlauf der Kamerabewegung "für die Zukunft des Bildsignales bekannt" ist. Dadurch ist eine rechtzeitige oder zeitlich vorgezogene Modifikation des Videosignals durch das Kennsignal K möglich. In dem Kompensator 9 erfolgt also die Auswertung des Videosignals V nur für den Bildausschnitt B, die Ausschaltung des Videosignals für den Randbereich zwischen B und der Begrenzung von T und gegebenenfalls die Verschiebung des ausgewerteten Bildausschnitts von B nach Bv gemäß Fig. 2. An der Klemme 10 am Ausgang des Kompensators 9 steht somit ein modifiziertes Videosignal Vm, das nur den Bildausschnitt B darstellt, wobei jedoch im Sinne der Beseitigung der Verwacklung die Lage von B nach Bv innerhalb von T durch das Kennsignal K verschoben sein kann.

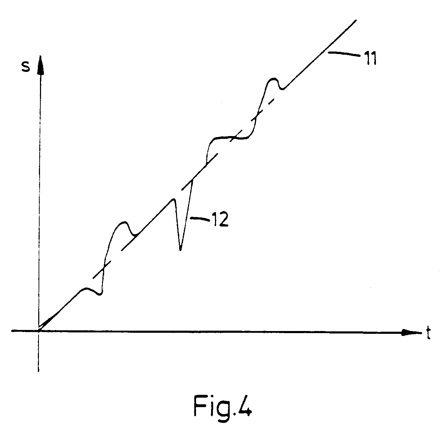

Fig. 4 zeigt die Bewegung s der Kamera 1 in Abhängigkeit von der Zeit t. Die Bewegung hat eine erste Komponente entsprechend der geraden Linie 11, die eine erwünschte langsame Schwenkbewegung darstellt. Diese Bewegungskomponente wird mit dem Detektor 4 nicht ausgewertet oder innerhalb des Kennsignals K in dem Kompensator 9 unberücksichtigt gelassen. Der Bewegungskomponente 11 ist die Komponente 12 überlagert, die höherfrequente Anteile hat und eine unerwünschte schnelle Bewegung der Kamera in Form einer Erschütterung oder eines Wackelns darstellt. In dem Kompensator 9 wird die höherfrequente Komponente 12 innerhalb des gesamten Kennsignals K erkannt und zur Modifikation des Videosignal V in Vm in der beschriebenen Weise gemäß Fig. 2, 3 ausgenutzt.

Die Auswertung des Kennsignals K folgt vorzugsweise in einem Prozessor, der den Verlauf s = f(t) gemäß Fig. 4 analysiert und jeweils den langsamen stetigen Verlauf gemäß der Komponente 11, der eine erwünschte Schwenkbewegung darstellt, und einen schnellen Verlauf gemäß der Komponente 12, der eine unerwünschte schnelle Bewegung darstellt, differenziert.

**Patentansprüche**

1. Einrichtung mit einer Videokamera (1) und einem Videorecorder (3) zur Aufzeichnung des von der Kamera erzeugten Videosignals (V), wobei ein der Kamera zugeordneter Bewegungsdetektor (4) ein Bewegungen der Kamera darstellendes Kennsignal (K) erzeugt, **gekennzeichnet durch** folgende Merkmale:
   a) Das Kennsignal (K) wird zusammen mit dem Videosignal (V) auf dem Recorder (3) aufgezeichnet und bei der Wiedergabe in einem Kompensator (9) zur Modifikation des Videosignals (V) im Sinne zur Beseitigung von Verwackelungen verwendet.
   b) Das Target (T) der Kamera (1) ist größer als der für die Bildwiedergabe verwendete Bildausschnitt (B).
   c) Das durch die Abtastung des gesamten Target (T) gewonnene Videosignal (V) wird aufgezeichnet und für die Bildwiedergabe nur das dem Bildausschnitt (B) zugeordnete Videosignal verwendet.
   d) Bei der Wiedergabe ist die Lage des auf dem Display dargestellten Bildausschnitts (B) relativ zum aufgezeichneten Ausschnitt durch das Kennsignal (K) steuerbar.

2. Einrichtung nach Anspruch 1, **dadurch gekennzeichnet**, daß das Videosignal (V) dem Kompensator (9) über eine Verzögerungsstufe (8) zugeführt wird.

3. Einrichtung nach Anspruch 1, **dadurch gekennzeichnet**, daß die Bewegungsdetektoren (4) durch Gyratoren gebildet sind.

4. Einrichtung nach Anspruch 1, **dadurch gekennzeichnet**, daß bei einem Recorder das Kennsignal (K) gemeinsam mit einem Tonsignal aufgezeichnet wird.

5. Einrichtung nach Anspruch 4, **dadurch gekennzeichnet**, daß bei einem Recorder mit Schrägspuraufzeichnung das Kennsignal auf einer Längsspur des Bandes aufgezeichnet wird.

6. Einrichtung nach Anspruch 1, **dadurch gekennzeichnet**, daß die Erzeugung, die Aufzeichnung und/oder die Auswertung des Kennsignals (K) in dem Modifikator (9) nur für unerwünscht schnelle Bewegung der Kamera (1) wie Stoß- oder Ruckbewegung erfolgt.

7. Einrichtung nach Anspruch 1, **dadurch gekennzeichnet**, daß der Modifikator (9) ein Prozessor ist, in dem das Videosignal (V) verlangsamt während eines gedehnten Zeitraums erfolgt, der länger ist als die Dauer des Videosignals (V).

**Claims**

1. Equipment including a video camera (1) and a video recorder (3) for recording the video signal produced by the camera, wherein a movement detector (4) associated with the camera generates a code signal (K) representing movements of the camera, characterised by the following features:
   a) The code signal (K) is recorded together with the video signal (V) in the recorder (3) and is used during the reproduction in a compensator (9) for modifying the video signal (V) in the sense of eliminating blurring caused by movements of the camera.
   b) The target (T) of the camera (1) is greater than the extract of the picture (B) used for the picture reproduction.
   c) The video signal (V) obtained by the scanning of the entire target (T) is recorded and only the video signal associated with the extract of the picture (B) is used for the picture reproduction.
   d) During the reproduction, the position of the extract of the picture (B) displayed on the display is controllable relative to the recorded scene by the code signal (K).

2. Equipment in accordance with Claim 1, characterised in that, the video signal (V) is supplied to the compensator (9) via a delay stage (8).

3. Equipment in accordance with Claim 1, characterised in that, the movement detectors (4) are formed by gyrators.

4. Equipment in accordance with Claim 1, characterised in that, for a recorder, the code signal (K) is recorded together with a sound signal.

5. Equipment in accordance with Claim 4, characterised in that, for a recorder using helical track recording, the code signal is recorded along a longitudinal track of the tape.

6. Equipment in accordance with Claim 1, characterised in that, the production, the recording and/or the evaluation of the code signal (K) in the modifying means (9) only occurs for undesired rapid movement of the camera (1) such as a jogged or jerky movement.

7. Equipment in accordance with Claim 1, characterised in that, the modifying means (9) is a processor in which the video signal (V) is slowed up during an extended time period which is longer than the duration of the video signal (V).

**Revendications**

1. Dispositif avec une caméra vidéo (1) et un magnétoscope (3) pour enregistrer le signal vidéo (V) produit par la caméra, un détecteur de mouvement (4) affecté à la caméra produisant un signal d'identification (K) qui représente des mouvements de la caméra, **caractérisé par** les caractéristiques suivantes :

   a) Le signal d'identification (K) est enregistré avec le signal vidéo (V) sur le magnétoscope (3) et est utilisé, lors de la restitution, dans un compensateur (9) pour modifier le signal vidéo (V) dans l'esprit de l'élimination des flous.
   b) La cible (T) de la caméra (1) est plus grande que la découpe d'image (B) utilisée pour la restitution de l'image.
   c) Le signal vidéo (V) obtenu par le balayage de l'ensemble de la cible (T) est enregistré et pour la restitution de l'image seulement le signal vidéo affecté à la découpe de l'image (B) est utilisé.
   d) A la restitution, la position de la découpe d'image (B) représentée sur l'écran de visualisation peut être commandée par le signal d'identification (K) par rapport à la découpe enregistrée.

2. Dispositif selon la revendication 1, **caractérisé en ce** que le signal vidéo (V) est amené au compensateur (9) par un étage de temporisation (8).

3. Dispositif selon la revendication 1, **caractérisé en ce** que les détecteurs de mouvement (4) sont formés par des gyrateurs.

4. Dispositif selon la revendication 1, **caractérisé en ce** que pour un magnétoscope le signal d'identification (K) est enregistré avec un signal son.

5. Dispositif selon la revendication 4, **caractérisé en ce** que dans un magnétoscope avec balayage hélicoïdal le signal d'identification est enregistré sur une piste longitudinale de la bande.

6. Dispositif selon la revendicaiton 1, **caractérisé en ce** que la production, l'enregistrement et/ou l'exploitation du signal d'identification (K) dans le modificateur (9) ne se fait que pour un mouvement rapide non intentionnel de la caméra (1) comme un mouvement par choc ou secousse.

7. Dispositif selon la revendication 1, **caractérisé en ce** que le modificateur (9) est un processeur dans lequel le signal vidéo (V) a lieu en étant ralenti pendant une période étendue qui est plus longue que la durée du signal vidéo (V).

Fig.1

Fig.2

Fig.3

Fig.4